# EUROPEAN PATENT APPLICATION

(11) **EP 3 695 992 A1**
(43) Date of publication of application: **19.08.2020**
(21) Application number: 20152082.2
(22) Date of filing: 15.01.2020
(51) Int. Cl.: B60G 7/00, B23K 26/28

(54) **CONTROL ARM CLAMPING PROCESS CONSISTING OF TWO SHAPED AND WELDED LASER PARTS**

(30) Priority: 14.02.2019 BR 102019003079
(71) Applicant: Aethra Sistemas Automotivos S/A, 32660-000 MG Cidade de Betim Minas Gerais (BR)
(72) Inventor: SPORTELLI, PIETRO, 32686-190 Cidade de Betim (BR)
(74) Representative: Pereira da Cruz, Joao

(57) **Abstract**

This invention concerns the application of the laser welding process in the joining of shaped and machined components for the production of a front suspension lower swing arm of automotive vehicles. This arm will be composed of two shaped parts (4, 5), a tube with a larger circular section (9) for the implantation of a cylindrical rubber bushing (2) coupled to a region of the shaped part (6), a cylindrical pin (8) fixed to a cylindrical tube with a smaller circular section (7), intended to ensure the connection of the pin with the shaped parts (4, 5), two bushings (1, 2) and one socket joint (3), and alternatively, without changing the laser welding process, in substitution to the cylindrical pin (8), fixed in a tube with smaller circular section (7) and a bushing with fixing flanges (1), using a rubber bushing fixed in the vertical form (15), fixed by pressure in the housing in the already laser welded plates (4, 5).

## Description

### FIELD OF THE INVENTION

The present invention concerns the method of fixing a lower swing arm for front suspension of a motor vehicle, composed of shaped and machined components, which are fixed to each other by laser welding, becoming a single piece ready for to be used in the assembly of motor vehicles.

The swing arm part, part of the front suspension assembly of automotive vehicles, plays a structural and dynamic role during vehicle operation and is responsible for ensuring safety, efficiency and controllability in various situations during its use.

The approval of the swing arm for use in motor vehicles depends on virtual and physical tests that assess mechanical stress, distortions and fatigue strength under predefined situations, so as to ensure the quality and safety of the end product.

### PRIOR ART OF THE INVENTION

The current state of this technique has known critical points, mainly due to the fact that the oscillating arm clamping process occurs through electric arc welding and spot welding. This fastening process is traditionally known and mastered by manufacturers and, since it has been around for a long time, has already been added to each one's knowledge. Apart from the above, this process also has limitations regarding the access of the regions to be welded, since there is a need for the welding torch to always be in direct contact with the region to be fixed. In addition, in the case of serial production, the fixing of the swing arm by means of electric arc welding and spot welding is seen as an obstacle in the production line, due to the high time consumed in the process, making it necessary to use of multiple cells in some cases.

The high thermal input applied to the components joined through electric arc welding and spot welding is the main aggravating factor in the failure of the part, which is subjected to rigorous safety tests during its validation and approval phase. This thermal input is responsible for severely reducing the strength of the part when under stress, which is the main reason for failure in physical and virtual tests. In addition, it is also responsible for imposing part deformations that impact the final quality, as well as influencing the dimensional quality tests.

Such disadvantages from the state of the art are often offset by the robustness of the product so that it can pass the required tests and by devices that compensate for thermal distortion of the part by applying loads at predetermined points under it.

The present invention offers a change in the union of the swing arm components. Because it is made by means of an autogenous oscillating arm clamping process by laser welding, with significant improvements in efficiency and economy in the production line, since it does not use addition material, presenting a lower thermal input when compared to the clamping by electric arc and spot welding. This low thermal input is considered a solution to the previously mentioned problems, since the reduction in fatigue strength is not so severe and the thermal distortions are smaller.

The process of attaching a frontal suspension swing arm by laser welding also has secondary benefits to the part quality, including high welding speed, increasing welding cell efficiency, and a wider access to the component attachment points, as the robot does not need to be in direct contact with the region to be welded. Thus, the laser welding oscillating swing arm clamping process offers an opportunity for improvement and efficiency in relation to the state of the art, thus influencing the quality of the final product.

The method of fixing the two-piece laser-welded shaped swing arm, object of this invention patent, can be better understood by referring to the accompanying figures, which are part of this specification and contain numerical references in conjunction with the description of its technical characteristics. Such figures do not restrict their configuration as to their dimensions, proportions and occasional types of materials inserted.

### BRIEF DESCRIPTION OF THE DRAWINGS

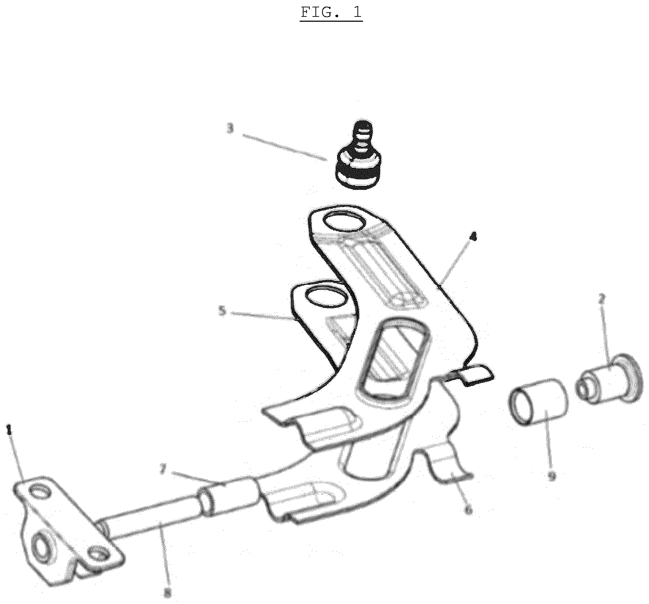

Figure 1 is an exploded view of the swing arm, where one may view each of its components.

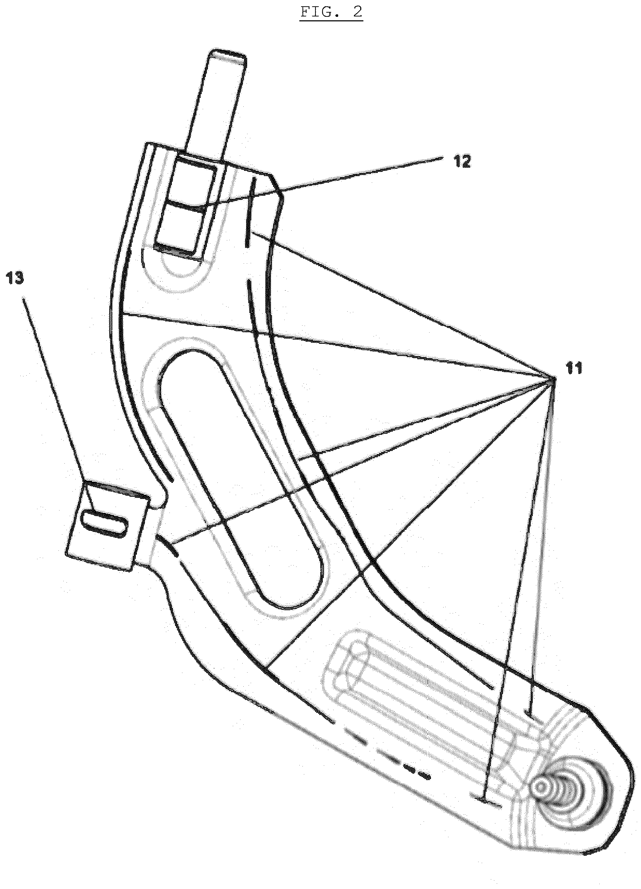

Figure 2 is a side perspective view of the arm indicating where laser welding should take place.

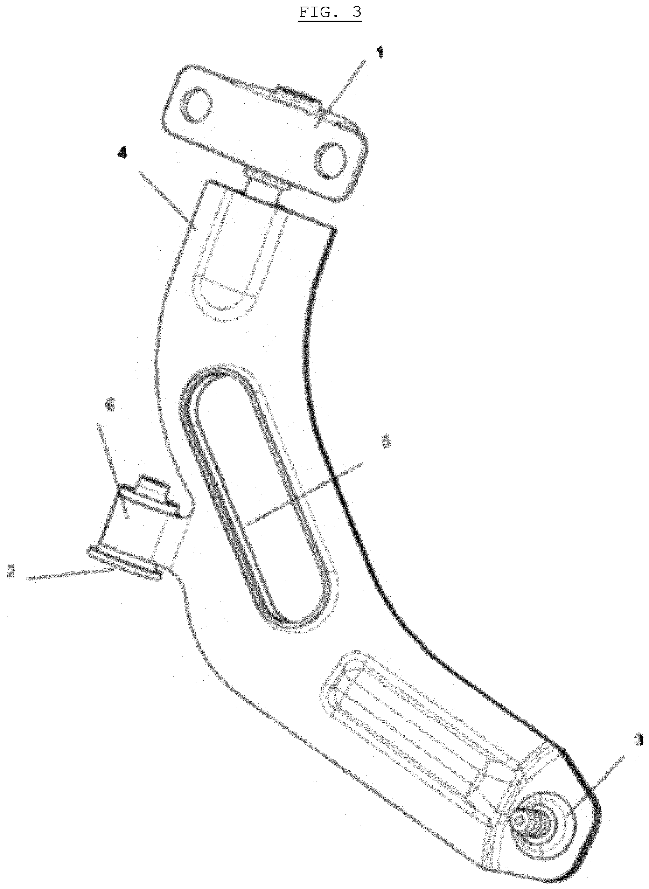

Figure 3 is a side perspective view of the arm and its already laser welded components.

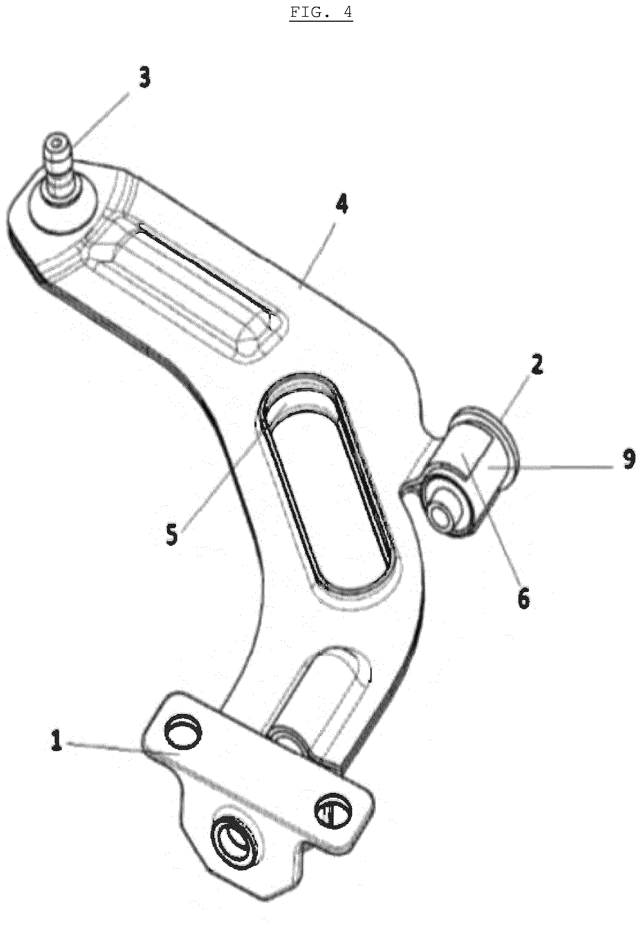

Figure 4 is a top perspective view of the arm and its already laser-welded components.
Figure 5 is a perspective view of the cylindrical pin (8) attached to a tube of smaller circular cross-section (7) by laser welding (14).

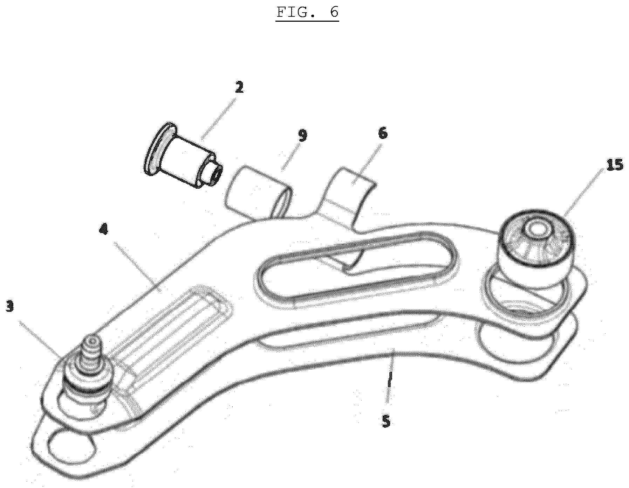

Figure 6 is an exploded view of the suspension arm, in which it is possible to visualize its components, where alternatively, and without changing the laser welding process, a rubber bushing in a vertical form (15), by pressure in the housing on the shaped laser-welded plates (4.5), may also be used in the coupling region, replacing the cylindrical pin (8) fixed to a tube with a smaller circular cross-section (7), and a bushing with fixing flanges (1).

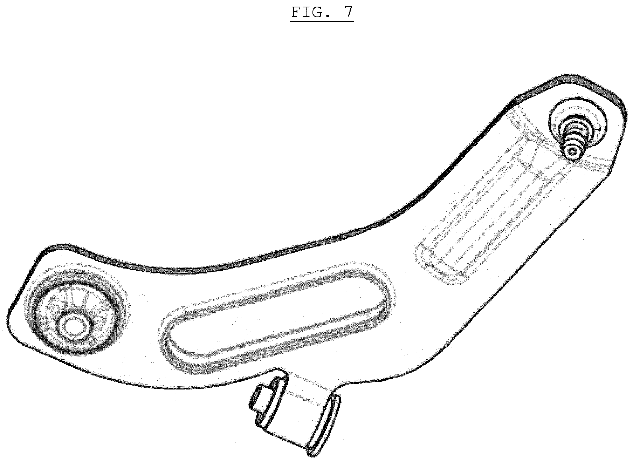

Figure 7 is a side view of the arm and its already laser-welded components, using the alternative form of rubber bushing fixed in the vertical form.

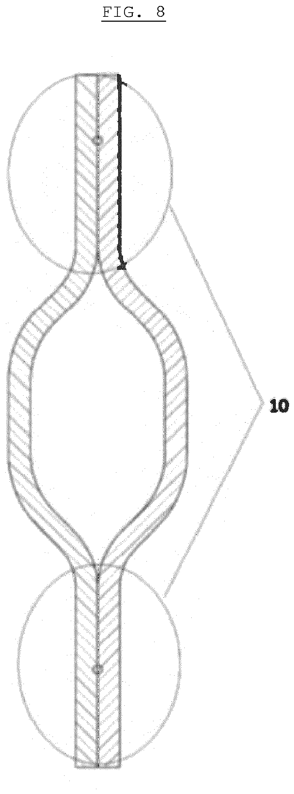

Figure 8 is a view of the horizontal sectional cut, in which it is possible to see the coupling area between the two formed sheets (4, 5).

### DETAIL DESCRIPTION OF THE INVENTION

With the implementation of the method of the present invention was necessary to change the shape of the product to adapt the necessary requirements for the correct execution of the weld. Thus, there was an increase in the coupling area (10) between the two sheets formed to ensure a smaller empty space between the components. The tube with a smaller circular section (7) was created to intermediate and facilitate the joining process between the pin (8) and the formed sheets (4, 5). The flanged region (6), at one of the ends of the formed plates, which connects to the tube with a larger circular section (9), had its end lengthened so that the device to fix the components by means of welding could make the correct positioning, without there being empty space.

Alternatively, and without changing the laser welding process, replacing the cylindrical pin (8), fixed to the tube with a smaller circular section (7) and a clamping flange bush (1), a rubber bush fixed in the vertical form (15), fixed by pressure in the already laser welded housing flanges (4, 5) may be used.

The resulting components of the forming process have dimensional and geometric tolerances that do not always match the requirements for the correct application of the laser welding process. Laser welding, on the other hand, as it is an autogenous joining process, requires a coupling of plates with low permissiveness of empty spaces. Thus, it is necessary to use devices that compensate for the dimensional variations resulting from the forming process so that the joining process is correctly executed. These devices are blocks machined in the nominal form of the part, compressed under the components themselves by high load actuators, forcing them to take the appropriate form for the application of welding, without the presence of voids.

The suspension arm is composed of two cold formed plates (4, 5), with a flanged region (6) in one of its extremities, a cylindrical pin (8), a tube of smaller circular section (7) wrapped to the aforementioned pin, a tube of larger circular section (9), laser welded (11, 12, 13, 14), used as housing for a rubber bushing (2), a socket joint (3), a cylindrical rubber bushing (2) and a bushing with clamping flanges (1), or optionally in place of the cylindrical pin (8), a smaller circular cross-section tube (7) and a bushing with clamping flanges (1), the vertically clamped rubber bushing (15) can be used in the two already laser-welded shaped plates (4, 5). These components together form the final product, which is connected at two anchor points on the vehicle's crossbar and at one anchor point on the vehicle's baseplate, working in vertical oscillatory movements during its use.

## Claims

1. Suspension arm clamping procedure consisting of two formed and laser-welded parts **characterized by** two symmetrical cold formed sheets (4, 5), fixed by laser welding (11) in the coupling region; a cylindrical pin (8), fixed to a tube of smaller circular cross-section (7) by laser welding (14), which in turn is fixed to the symmetrical formed parts by the same process (12); a tube of larger circular cross-section (9), which is also fixed to the two formed parts by laser welding (13), between the tube (9) and a flanged region at one end of the formed part (6).

2. Suspension according to claim 1 **characterized by** being the flanged region (6) of the conformed part that attaches to the tube of larger circular section (9), having its extremity lengthened so that the fixation device of the components, through the laser welding, could make the correct positioning without the presence of empty space.

3. Suspension according to claim 1, **characterized by** being, by the clamping process, a cylindrical pin (8), a smaller circular cross-section tube (7) wrapped around the aforementioned pin, a larger circular cross-section tube (9) used as housing for a cylindrical shaped rubber bushing (2), a socket joint (3), and a bushing with clamping flanges (1).

4. Suspension according to claim 1 and 3, **characterized by** using, alternatively, and without altering the laser welding process, instead of the cylindrical pin (8), fixed in a tube with a smaller circular section (7) and a bushing with fixing flanges (1), a rubber bushing fixed in the vertical form (15), fixed by pressure in housing in the already welded laser plates (4,5).
